# EUROPEAN PATENT APPLICATION

(11) **EP 4 765 827 A1**
(43) Date of publication of application: **24.06.2026**
(21) Application number: 24870085.8
(22) Date of filing: 31.07.2024
(51) Int. Cl.: H04N 21/233

(54) **AUDIO PROCESSING METHOD AND APPARATUS**

(30) Priority: 28.09.2023 CN 202311290467
(71) Applicant: HUAWEI TECHNOLOGIES CO., LTD., Shenzhen 518129 (CN)
(72) Inventor: YIN, Yingcai, Shenzhen, Guangdong 518129 (CN); ZOU, Zhiming, Shenzhen, Guangdong 518129 (CN); LI, Da, Shenzhen, Guangdong 518129 (CN); QIU, Junhao, Shenzhen, Guangdong 518129 (CN); WANG, Zhe, Shenzhen, Guangdong 518129 (CN); XIA, Bingyin, Shenzhen, Guangdong 518129 (CN); LI, Jiawei, Shenzhen, Guangdong 518129 (CN)
(74) Representative: MERH-IP Matias Erny Reichl Hoffmann Patentanwälte PartG mbB
(86) International application number: PCT/CN2024/109053
(87) International publication number: WO 2025/066533

(57) **Abstract**

This application discloses an audio processing method and an apparatus, and relates to the encoding and decoding field. A decoding device obtains an audio stream including metadata that describes object information of objects; and when decoding the audio stream, adjusts the metadata of the audio stream in real time with reference to a change of the metadata by the user, thereby controlling audio output of the audio stream based on the metadata that is adjusted in real time. In this way, the user does not need to modify metadata of an object in the audio stream in a bitstream production process, and can adjust an attribute such as a sound channel of any object in the audio stream in real time according to a requirement, to implement audio output that satisfies the user requirement, thereby improving flexibility in the audio output.

## Description

This application claims priority to Chinese Patent Application No. 202311290467.X, filed with the China National Intellectual Property Administration on September 28, 2023 and entitled "AUDIO PROCESSING METHOD AND APPARATUS", which is incorporated herein by reference in its entirety.

### TECHNICAL FIELD

This application relates to the encoding and decoding field, and in particular, to an audio processing method and an apparatus.

### BACKGROUND

For an object-based audio stream, audio signals in the audio stream are decomposed into a plurality of independent objects, for example, a singer's voice in a concert and an engine sound of a vehicle on a racetrack. Each object includes a part of information of the audio signals, for example, a location, a direction, and a distance of a sound source. These objects can be independently encoded, transmitted, and processed to achieve more flexible and efficient audio processing and transmission.

When the object-based audio stream is output, the objects are rendered to different sound channels, to play multi-channel audio by using horns on the different sound channels. However, a manner of rendering the objects in the audio stream is fixed in a bitstream production process of the audio stream, and a user cannot dynamically adjust an attribute such as a sound channel of an object in the audio stream based on subjective feeling, resulting in poor flexibility in audio stream output.

### SUMMARY

This application provides an audio processing method and an apparatus, to resolve a problem of poor flexibility in audio stream output when a user cannot adjust object attributes of an object-based audio stream.

According to a first aspect, an audio processing method is provided. The audio processing method is applied to an encoding and decoding system. For example, the audio processing method is performed by a decoding device in the encoding and decoding system. The audio processing method includes: First, the decoding device obtains an audio stream, where the audio stream includes metadata, and the metadata describes object information in the audio stream; next, the decoding device displays a control group on an interactive interface based on the metadata, and generates metadata change information in response to an operation on the control group, and when decoding the audio stream, the decoding device changes the metadata of the audio stream based on the metadata change information to obtain a decoding result, where the decoding result includes changed metadata and audio data carried in the audio stream; and finally, the decoding device outputs, based on the changed metadata, audio corresponding to the audio data.

In this embodiment, the decoding device provides the user with the interactive interface to display the control group, and changes metadata of an object in a decoding process of the audio stream based on the operation that is performed by the user on the control group. In this way, the user does not need to modify the metadata of an object in the audio stream in a bitstream production process, and can adjust an attribute such as a sound channel of any object in the audio stream in real time according to a requirement, to implement audio output that satisfies the user requirement, thereby improving flexibility in the audio output.

In a possible implementation, the audio stream includes at least one object. The metadata includes at least one object parameter, and one object parameter describes object information of one object. The object parameter includes at least one of an object name, an object sound volume, a mute state, and an object sound direction. The control group includes a first control group and a second control group.

Optionally, when displaying the interactive interface, the decoding device displays the first control group based on a name of the at least one object parameter, determines a target object parameter in response to a first operation on the first control group, and then displays the second control group based on the target object parameter. A control in the second control group is used to: in response to a second operation, adjust the object sound volume, the mute state, or the object sound direction and generate the metadata change information.

For example, the first control group includes at least one control, one control is displayed as a name of one object parameter, and each control is used to determine, in response to the first operation performed by the user, the target object parameter selected by the user.

For another example, the second control group includes at least one control, and each control is used to: in response to a second operation performed by the user, adjust an object sound volume, a mute state, or an object sound direction corresponding to the target object parameter and generate the metadata change information.

In the foregoing implementation, the decoding device provides, on the interactive interface, the user with various objects in the audio stream and controls for different types of object parameters of the objects, thereby improving flexibility in adjusting the audio stream by the user based on the objects.

In a possible implementation, the target object parameter in the at least one object parameter is used as an example, the metadata change information includes first metadata change information, and the first metadata change information includes a changed target object parameter.

Optionally, when decoding the audio stream, the decoding device parses the audio stream into object information, sound bed information, and metadata information, then replaces the target object parameter in the metadata information with the changed target object parameter, to obtain changed metadata code, and finally outputs a decoding result. The changed metadata information represents the changed metadata, and the decoding result includes the object information, the sound bed information, and the changed metadata information. In this way, when decoding the audio stream, the encoding device changes, based on the metadata change information, the metadata obtained by decoding the audio stream, and the user does not need to modify the metadata of the object in the audio stream in the bitstream making process, thereby reducing a requirement on professionalism of the user and improving universality of the method. In addition, compared with encapsulation of the metadata change information into the audio stream to indicate parsing of the audio stream, the metadata of the object in the audio stream is adjusted in a process of parsing the audio stream, and the metadata change information does not need to be encapsulated, thereby reducing a bandwidth and a compute resource required for parsing the audio stream.

Optionally, before changing the metadata information, the decoding device determines the target object parameter in the metadata information based on an index of the target object parameter, to implement precise adjustment of the object.

In a possible implementation, the decoding device may implement, based on object grouping, adjustment performed by the user on different objects, thereby providing the user with more audio output modes.

Optionally, the object parameter further includes a group to which an object belongs and a group member. The decoding device displays a third control group on the interactive interface based on the metadata, and in response to a third operation that is performed by the user on the third control group, determines a target group and generates second metadata change information, so that the metadata of the audio stream is also changed based on the second metadata change information when the audio stream is decoded. The second metadata change information includes the at least one object parameter that has been changed, and an object sound volume of an object parameter that is in the at least one changed object parameter and does not belong to the target group is a minimum value.

In the foregoing implementation, the decoding device adjusts object parameters of a plurality of objects in the audio stream in batches based on selection of the group by the user, to provide the user with a simple manner of switching between different audio output modes, thereby reducing operation complexity.

In a possible implementation, the object parameter further includes a mutually exclusive object. After determining the target object parameter in response to the first operation on the first control group, the decoding device sets an object sound volume of an object parameter of the mutually exclusive object of the target object parameter to a minimum value. In this way, when the user selects to output audio of a target object in the plurality of objects, object sound volume of the mutually exclusive object that interferes with the target object is set to the minimum value, and the user does not need to manually select and adjust a parameter such as the object sound volume of the mutually exclusive object, thereby simplifying a user operation.

In a possible implementation, the decoding device updates the interactive interface in real time based on different frames of the audio stream, so that the user can adjust the object parameter more accurately and quickly based on a change status of a preset object parameter of an object in the audio stream, thereby improving real-time object parameter adjustment.

In a possible implementation, when outputting the audio based on the decoding result, the decoding device performs audio mixing of the object information on a corresponding sound bed based on a constraint of the changed metadata, to obtain original multi-channel encoded data, then performs sound effect rendering on the original multi-channel encoded data to obtain rendered multi-channel encoded data, and finally outputs the audio based on the rendered multi-channel encoded data.

In a possible implementation, the object sound direction is represented by three-dimensional coordinates.

According to a second aspect, an audio processing apparatus is provided. The audio processing apparatus includes a module configured to implement the audio processing method provided in any one of the implementations of the first aspect. For example, the audio processing apparatus includes a bitstream module, a display module, an adjustment module, and a rendering module. The bitstream module is configured to obtain an audio stream, where the audio stream includes metadata, and the metadata describes object information in the audio stream. The display module is configured to display a control group on an interactive interface based on the metadata, and generate metadata change information in response to an operation on the control group. The adjustment module is configured to: when the audio stream is decoded, change the metadata based on the metadata change information to obtain a decoding result, where the decoding result includes changed metadata and audio data carried in the audio stream. The rendering module is configured to output, based on the changed metadata, audio corresponding to the audio data.

In a possible implementation, the audio stream includes at least one object, the metadata includes at least one object parameter, one object parameter describes object information of one object, and the object parameter includes at least one of an object name, an object sound volume, a mute state, and an object sound direction.

Optionally, the display module is specifically configured to: display a first control group based on a name of the at least one object parameter, determine a target object parameter in response to a first operation on the first control group, and display a second control group based on the target object parameter. A control in the second control group is used to: in response to a second operation, adjust the object sound volume, the mute state, or the object sound direction and generate the metadata change information.

In a possible implementation, the metadata change information includes first metadata change information, and the first metadata change information includes a changed target object parameter.

Optionally, the adjustment module is specifically configured to: when the audio stream is decoded, parse the audio stream into object information, sound bed information, and metadata information; replace the target object parameter in the metadata information with the changed target object parameter to obtain changed metadata information, where the changed metadata information represents the changed metadata; and output the decoding result, where the decoding result includes the object information, the sound bed information, and the changed metadata information.

In a possible implementation, the first metadata change information further includes an index of the target object parameter, and the adjustment module is further configured to determine the target object parameter in the metadata information based on the index of the target object parameter.

In a possible implementation, the object parameter further includes a group to which an object belongs and a group member, and the display module is further configured to: display a third control group on the interactive interface based on the metadata; and in response to a third operation on the third control group, determine a target group and generate second metadata change information, where the second metadata change information includes the at least one object parameter that has been changed, and an object sound volume of an object parameter that is in the at least one changed object parameter and does not belong to the target group is a minimum value.

In a possible implementation, the object parameter further includes a mutually exclusive object, and the adjustment module is further configured to set an object sound volume of an object parameter of the mutually exclusive object of the target object parameter to a minimum value.

In a possible implementation, the display module is further configured to: when metadata of a second frame is different from metadata of a first frame of the audio stream, update the control group based on the metadata of the second frame, where the second frame is an n^{th} frame following the first frame, and n is a positive integer.

In a possible implementation, the rendering module is specifically configured to: perform audio mixing of the object information on a corresponding sound bed based on a constraint of the changed metadata, to obtain original multi-channel encoded data; perform sound effect rendering on the original multi-channel encoded data, to obtain rendered multi-channel encoded data; and output the audio based on the rendered multi-channel encoded data.

In a possible implementation, the object sound direction is represented by three-dimensional coordinates.

According to a third aspect, an electronic device is provided, including a memory and a processor. The memory is configured to store a group of computer instructions. When executing the group of computer instructions, the processor is configured to perform operation steps of the audio processing method in any one of the first aspect or the possible implementations of the first aspect.

According to a fourth aspect, an encoding and decoding system is provided, including an encoding device and a decoding device. The encoding device is communicatively connected to the decoding device, and the encoding device is configured to generate an audio stream. The audio stream includes metadata, and the metadata describes object information in the audio stream. The decoding device is configured to perform operation steps of the audio processing method in any one of the first aspect or the possible implementations of the first aspect.

In addition, for technical effects of the audio processing apparatus in the second aspect, the electronic device in the third aspect, and the encoding and decoding system in the fourth aspect, reference may be made to the technical effects of the obstacle detection method in the first aspect. Details are not described herein.

According to a fifth aspect, a readable storage medium is provided. The readable storage medium includes a computer program or instructions. When the computer program or the instructions are run on a computer, the computer is caused to perform the audio processing method in any one of the possible implementations of the first aspect.

According to a sixth aspect, a computer program product is provided. The computer program product includes a computer program or instructions. When the computer program or the instructions are run on a computer, the computer is caused to perform the audio processing method in any one of the possible implementations of the first aspect.

### BRIEF DESCRIPTION OF DRAWINGS

FIG. 1 is a principle diagram of Dolby Atmos;
FIG. 2 is a principle diagram of an immersive sound;
FIG. 3 is a diagram of a structure of an audio transmission system according to this application;
FIG. 4 is a diagram of an audio encoding and decoding system according to this application;
FIG. 5 is a schematic flowchart of an audio processing method according to this application;
FIG. 6 is a diagram of an interactive interface according to this application;
FIG. 7 is a diagram of a group interactive interface according to this application;
FIG. 8a is a diagram of another group interactive interface according to this application;
FIG. 8b is a diagram of still another group interactive interface according to this application;
FIG. 9 is a diagram in which an object does not support sound direction adjustment according to this application;
FIG. 10 is a diagram in which an object supports sound direction adjustment according to this application;
FIG. 11 is another diagram in which sound direction adjustment is not supported according to this application;
FIG. 12 is another diagram in which an object supports sound direction adjustment according to this application;
FIG. 13 is a diagram of a structure of an audio processing apparatus according to this application;
FIG. 14 is a diagram of a structure of another audio processing apparatus according to this application; and
FIG. 15 is a diagram of a structure of an electronic device according to this application.

### DESCRIPTION OF EMBODIMENTS

An audio processing method and an apparatus provided in embodiments of this application can be applied to a multi-channel spatial audio playing scenario, and possible actual technologies of this application are briefly described as follows.

### (1) Spatial audio

The spatial audio may mean an audio specification of a three-dimensional sound. Compared with conventional multi-channel audio, the spatial audio has a quantity of sound channels greater than that of stereo, and may further accommodate object-based (object-based) sound information. The object-based sound information exactly records a position (static) and a displacement (dynamic) of a point of occurrence relative to a listener in a coordinate manner. In a playing device, an amplitude-frequency response (timbre) and a phase-frequency response (a sense of space) of an object (object) in a sound channel (channel) or a sound bed (bed) may be accurately computed and played back in cooperation with a local or cloud codec.

Sound channels usually mean mutually independent audio signal channels used for capturing or playback at different spatial locations during audio production and playback. The sound bed is a term corresponding to sound channels on a production side. For example, when an audio system of 7.1.4 sound channels uses audio mixing for an object, any audio track of the object is allocated to a 7.1.4 sound bed channel based on three-dimensional coordinates of the object, to control a direction of a sound image in three-dimensional space.

An object is sound image information recorded in a form of three-dimensional coordinates. Each object includes a part of information of audio signals, for example, a child's cry, a commentary voice in a football game, or a cheer from the audience of a basketball game.

The spatial audio further includes metadata of objects. Metadata describes object information in an audio stream, and the described content includes: a magnitude of a sound volume of an object, an orientation and an angle of the object, and the like. The metadata may be adjusted in a bitstream production process to achieve a better audiovisual effect.

A spatial audio technology further includes a rendering part. To be specific, a renderer renders objects in audio, to render the objects to horns on different sound channels based on metadata of the objects in a rendering process and restore an intention of a bitstream producer or on-site listening experience of sound recording, thereby creating immersive audio experience for a user.

### (2) Codec

A codec (codec) is a collective term for an encoder and a decoder. The codec (codec) is a device or program capable of converting a signal or a data stream. The conversion herein includes not only an operation of encoding (generally for transmission, storage, or encryption) or extracting the signal or the data stream to obtain an encoded stream, but also an operation of restoring, for a purpose of observation or processing, a form suitable for observation or operation from the encoded stream.

For example, an audio encoder is configured to compress digital audio signals sampled one by one into a small data stream for transmission or storage. For another example, an audio decoder is configured to restore a data stream compressed by an audio encoder to original digital audio signals for playing and processing.

Existing object-based audio stream processing includes standards such as Dolby Atmos (Dolby Atmos) and immersive sound (DTS:X).

Dolby Atmos is a widely used object-based spatial audio technology, which supports a playback system with up to 128 independent audio tracks and 64 speakers. Dolby Atmos is applied to a sound bed, and ushers in a concept of a sound object. Each sound object has its own metadata information to record X-axis, Y-axis, and Z-axis coordinates of the object and sound volume information of the object.

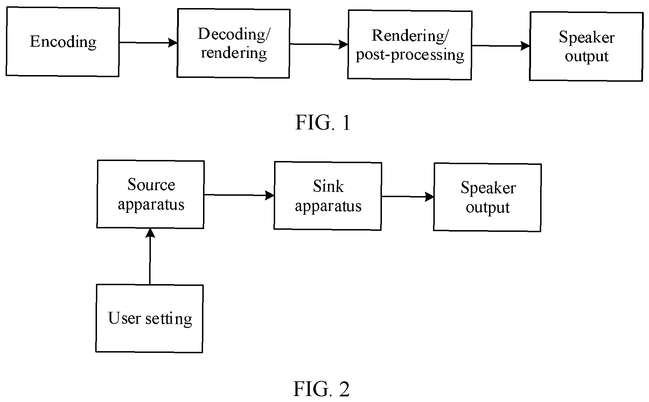

As shown in FIG. 1, the Dolby Atmos includes steps such as encoding, decoding/rendering, rendering/post-processing, and speaker output.

However, after a bitstream is produced in Dolby Atmos, metadata information is fixed and does not change, and a user cannot dynamically adjust attributes of a sound object based on their feelings. In addition, there are strict requirements on a quantity and a layout of hardware such as a speaker. A multi-channel playing effect can be better restored only when a metadata requirement is satisfied during bitstream production.

The immersive sound is object-based just like Dolby Atmos, but does not strictly calibrate a quantity of speakers. Playback rendering can be performed freely based on the quantity and positions of speakers. As shown in FIG. 2, a user may change metadata configuration of a bitstream in a source apparatus by using a user setting device such as a remote control. Adjusted metadata is sent through the source apparatus to a sink apparatus for reception, decoded and rendered through the sink apparatus, and then output through a speaker.

For the immersive sound, although the user can modify an attribute of an object, the user needs to re-encode the bitstream to modify the attribute of the object. A re-encoding operation is usually implemented on the production side, and the operation is complex and highly professional, imposing a high requirement on professionalism of the user. In addition, the re-encoding operation causes a long span of time from modification of the attribute of the object to speaker output, and this is not conducive to real-time adjustment of the attribute of the object of audio.

This application provides an audio processing method, and specifically relates to an audio processing method "supporting real-time modification of metadata of an object". First, a decoding device obtains an audio stream. The audio stream includes metadata, and the metadata describes object information in the audio stream. Next, the decoding device displays a control group on an interactive interface based on the metadata, and generates metadata change information in response to an operation on the control group. When decoding the audio stream, the decoding device changes the metadata of the audio stream based on the metadata change information to obtain a decoding result. The decoding result includes changed metadata. Finally, the decoding device outputs, for the decoding result, audio based on the changed metadata. In this way, the user can change metadata of an object in a decoding process of the audio stream in real time based on the interactive interface and does not need to modify the metadata of the object in the audio stream in a bitstream production process, and can adjust an attribute such as a sound channel of any object in the audio stream in real time according to a requirement, to implement audio output that satisfies the user requirement, thereby improving flexibility in the audio output.

The following describes implementations of embodiments of this application in detail with reference to the accompanying drawings.

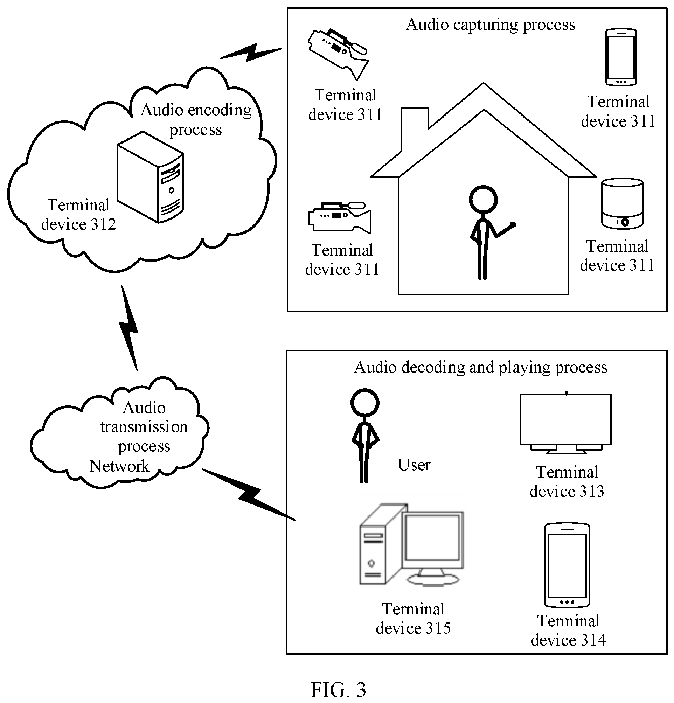

FIG. 3 is a diagram of a structure of an audio transmission system according to this application.

FIG. 3 is a diagram of an audio transmission system according to an embodiment of this application. An audio processing procedure includes audio capturing, audio encoding, audio transmission, and audio decoding and playing processes. The audio transmission system includes a plurality of terminal devices (such as terminal devices 311 to 315 shown in FIG. 3) and a network. The network may implement an audio transmission function. The network may include one or more network devices. The network device may be a router, a switch, or the like.

The terminal device shown in FIG. 3 may be, but is not limited to, user equipment (user equipment, UE), a mobile station (mobile station, MS), a mobile terminal (mobile terminal, MT), or the like. The terminal device may be a mobile phone (for example, a terminal device 314 shown in FIG. 3), a tablet computer, a computer having a wireless transceiver function (for example, the terminal device 315 shown in FIG. 3), a virtual reality (virtual reality, VR) terminal device (for example, a terminal device 313 shown in FIG. 3), an augmented reality (augmented reality, AR) terminal device, a wireless terminal in industrial control (industrial control), a wireless terminal in self-driving (self-driving), a wireless terminal in a smart city (smart city), a wireless terminal in smart home (smart home), or the like.

As shown in FIG. 3, terminal devices are different in different processes of audio processing. For example, in an audio capturing process, the terminal device 311 may be a sound box or a camera apparatus (such as a camcorder or a camera) having an audio recording function; or a mobile phone, a tablet computer, or an intelligent wearable device having an audio capturing function. For another example, in an audio encoding process, a terminal device 312 may be a server, or may be a data center. The data center may include one or more physical devices having an encoding function, for example, a server, a mobile phone, a tablet computer, or another encoding device. For another example, in an audio decoding and playing process, the terminal device 313 may be a television, and a user may select a control group on an interactive interface by using a remote control to modify metadata of an object in an audio stream; the terminal device 314 may be a mobile phone, and the user may control a control group on an interactive interface by using a touch operation, a touchless interaction operation, or the like to modify metadata of an object in an audio stream; and the terminal device 315 may be a personal computer, and the user may control a control group on an interactive interface by using an input device such as a mouse or a keyboard to modify metadata of an object in an audio stream.

It may be understood that audio is a general term. The audio includes an audio sequence of a plurality of consecutive frames, and one frame corresponds to a segment of audio data with a fixed length. For example, one frame corresponds to a segment of 26-millisecond audio data.

FIG. 3 shows merely an example. The audio transmission system may further include another device not shown in FIG. 3. A quantity and types of terminal devices included in the system are not limited in this embodiment of this application.

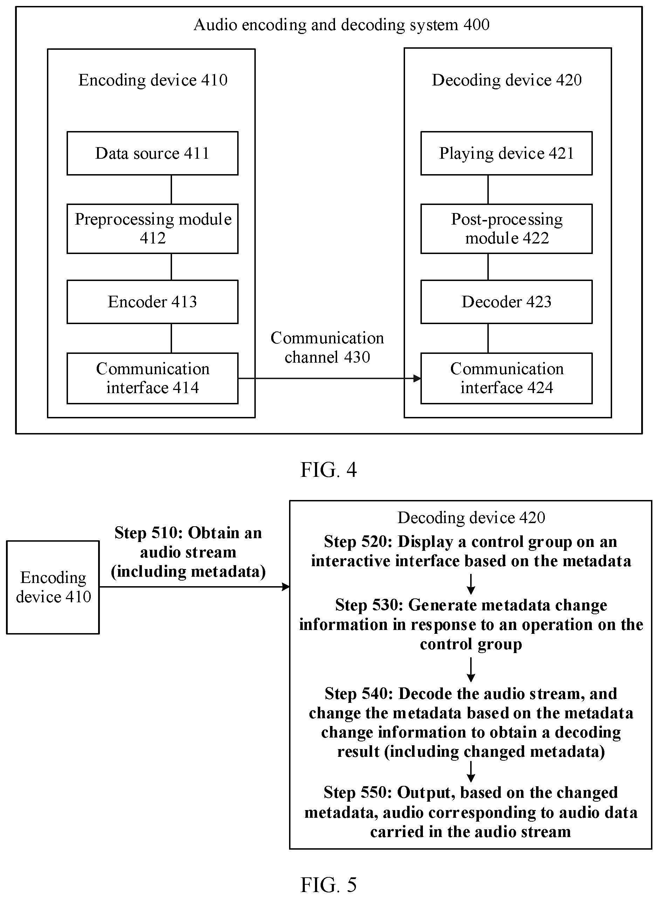

Based on the audio transmission system shown in FIG. 3, FIG. 4 is a diagram of an audio encoding and decoding system according to an embodiment of this application. The audio encoding and decoding system 400 includes an encoding device 410 and a decoding device 420. The encoding device 410 has a communication connection to the decoding device 420 established through a communication channel 430.

The encoding device 410 may implement an audio encoding function. As shown in FIG. 3, the encoding device 410 may be the terminal device 312, or the encoding device 410 may be a data center having an audio encoding capability. For example, the data center includes a plurality of servers.

The encoding device 410 may include a data source 411, a preprocessing module 412, an encoder 413, and a communication interface 414.

The data source 411 may include or may be any type of electronic device configured to capture audio, and/or any type of source audio generation device, for example, a computer sound card configured to generate a computer animation scene, or any type of device configured to obtain and/or provide source audio or computer-generated source audio. The data source 411 may be any type of memory or storage that stores the foregoing source audio. The foregoing source audio may include a plurality of audio streams captured by a plurality of audio capturing apparatuses (for example, microphones and sound boxes).

The preprocessing module 412 is configured to receive the source audio, and preprocess the source audio to obtain multi-channel audio (for example, spatial audio). For example, the preprocessing performed by the preprocessing module 412 may include audio format conversion, audio splicing, and the like.

The encoder 413 is configured to receive the audio, and encode the audio to obtain encoded data. For example, the encoder 413 encodes the audio to obtain a bitstream (also referred to as an audio stream). In some optional cases, the bitstream obtained through encoding may also be referred to as a bit stream.

The communication interface 414 in the encoding device 410 may be configured to: receive the encoded data and send the encoded data (or a version of the encoded data obtained through any other processing) to another device, for example, the decoding device 420, or any other device, through the communication channel 430 for storage, display, direct rebuilding, or the like.

Optionally, the encoding device 410 includes a bitstream buffer, and the bitstream buffer is used to store a bitstream corresponding to one or more coding units.

The decoding device 420 may implement an audio decoding function. As shown in FIG. 3, the decoding device 420 may be any one of the terminal devices 313 to 315 shown in FIG. 3.

The decoding device 420 may include a playing device 421, a post-processing module 422, a decoder 423, and a communication interface 424.

The communication interface 424 in the decoding device 420 is configured to receive encoded data (or a version of the encoded data obtained through any other processing) from the encoding device 410 or from any other encoding device such as a storage device.

The communication interface 414 and the communication interface 424 may be configured to send or receive the encoded data through a direct communication link between the encoding device 410 and the decoding device 420, for example, through a direct wired or wireless connection, or via any type of network such as a wired or wireless network or any combination thereof, or via any type of private network and public network or any combination thereof.

The communication interface 424 corresponds to the communication interface 414, and may be configured to, for example, receive transmitted data, and process the transmitted data through any type of corresponding transmission decoding or processing and/or decapsulation to obtain the encoded data.

The communication interface 424 and the communication interface 414 each may be configured as a unidirectional communication interface indicated by an arrow that corresponds to the communication channel 430 and is directed from the encoding device 410 to the decoding device 420 in FIG. 4, or a bidirectional communication interface, and may be configured to: send/receive a message or the like to establish a connection, and determine and exchange any other information related to a communication link or data transmission such as transmission of encoded compressed data, and the like.

The decoder 423 is configured to receive the encoded data, and decode the encoded data, to obtain decoded data (audio or the like).

The post-processing module 422 is configured to perform post-processing on the decoded data obtained through decoding to obtain post-processed data (for example, to-be-displayed audio). The post-processing performed by the post-processing module 422 may include sound bed rendering, sound effect rendering, and the like, or any other processing such as generating data to be played by the playing device 421.

The playing device 421 is configured to receive the post-processed data for a user, a viewer, or the like to play. The playing device 421 may be or may include any type of display screen and speaker, for example, a display screen integrating a speaker. For example, the display screen may include a liquid crystal display (liquid crystal display, LCD), an organic light-emitting diode (organic light-emitting diode, OLED) display, a plasma display, a projector, a miniature LED display, a liquid crystal on silicon (liquid crystal on silicon, LCoS) display, a digital light processor (digital light processor, DLP), or another display screen of any type. For another example, the speaker may include a multi-channel speaker of an electric type, an electrostatic type, an electromagnetic type, or a piezoelectric type.

In an optional implementation, the encoding device 410 and the decoding device 420 may perform transmission of the encoded data by using a data forwarding device. For example, the data forwarding device may be a router or a switch.

The following describes an implemented method in this application in detail with reference to the accompanying drawings.

Herein, description is made by using an example in which the audio processing method in embodiments of this application is performed by the decoding device 420 shown in FIG. 4. FIG. 5 is a schematic flowchart of an audio processing method according to an embodiment of this application. The audio processing method includes steps 510 to 550 as follows.

Step 510: The decoding device 420 obtains an audio stream.

In a possible example, the audio stream includes data of at least one object. The audio stream further includes metadata, and the metadata describes object information of a plurality of objects in the audio stream. The objects herein may mean but are not limited to sound objects, for example, a plurality of independent objects obtained by decomposing audio signals in the audio stream, for example, a singer's voice in a concert and an engine sound of a vehicle on a racetrack. Each object includes a part of information of the audio signals, for example, a location, a direction, and a distance of a sound source. These objects can be independently encoded, transmitted, and processed to achieve more flexible and efficient audio processing and transmission.

In a possible implementation, the metadata includes at least one object parameter, and one object parameter describes object information of one object. The object parameter includes at least one field from an object name, an object sound volume, a mute state, and an object sound direction.

The object sound volume represents a sound volume of an object, the mute state represents whether the object is in a mute state, the sound volume of the object in the mute state is a minimum value, and the object sound direction represents a location of a sound of the object. For example, the object sound direction represents the location of the sound of the object by using a Cartesian coordinate system.

A format of the audio stream is not limited in this application. For example, the audio stream may be in anAVS3-P3 format.

Step 520: The decoding device 420 displays a control group on an interactive interface based on the metadata.

In a possible example, the control group includes a first control group and a second control group. The first control group is used to determine a target object parameter in response to a first operation performed by a user. The second control group is used to: in response to a second operation performed by the user, adjust a value of at least one field in the target object parameter and generate metadata change information.

In a possible implementation, the decoding device 420 displays the first control group based on a name of the at least one object parameter, determines the target object parameter in response to the first operation that is performed by the user on the first control group, and then displays the second control group based on the target object parameter.

Optionally, the target object parameter is carried in the metadata of the audio stream, and the metadata may be obtained by parsing the audio stream by a decoder 423.

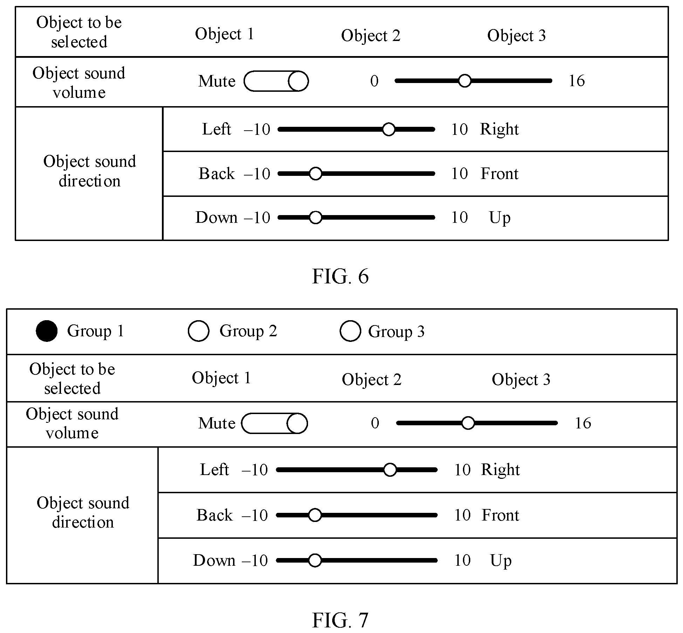

For example, as shown in FIG. 6, a first region of the interactive interface displays objects to be selected, and the decoding device 420 uses object names of objects to which the at least one object parameter belongs as display identifiers, and displays a name of the first control group and a control corresponding to each object in the first region, for example, three controls whose object names are an object 1, an object 2, and an object 3 respectively.

Next, the control of the object 1 is used as an example. The control of the object 1 includes a selected state and an unselected state. The selected state represents that an object parameter corresponding to the control of the object 1 is in the selected state, and the unselected state represents that the object parameter corresponding to the control of the object 1 is in the unselected state. When the user triggers the control of the object 1 in the unselected state by performing an operation, such as selection by touching a screen or using a remote control, the decoding device 420 switches, in response to the user operation, the object parameter corresponding to the control of the object 1 to the selected state, and determines that the target object parameter is the object parameter of the object 1.

In a ball game playing scenario, the object 1 may be a commentary, the object 2 may be a game field atmosphere, and the object 3 may be a game field broadcast. The commentary may include a Chinese commentary, an English commentary, and the like.

A second region of the interactive interface displays a name of the second control group and the second control group that are used to adjust the target object parameter. The second control group includes a control used to adjust any field value of the target object parameter. A quantity and types of controls included in the second control group are determined by a field included in the target object parameter. For example, when the target object parameter is the object 1, the second control group includes three controls representing the mute state, the object sound volume, and the object sound direction of the object parameter. A control corresponding to the mute state may be displayed as a mute identifier, and includes a selected state and an unselected state. The selected state represents that the object sound volume of the object 1 is set to the minimum value. A control corresponding to the object sound volume includes a sliding bar. The sliding bar adjusts the object sound volume in response to a user operation. The sliding bar increases the object sound volume when sliding in a first direction (for example, a direction to 16), and decreases the object sound volume when sliding in a second direction (for example, a direction to 0). The second direction is a direction opposite to the first direction.

Optionally, the interactive interface may further display the second control group in more regions. For example, a control corresponding to the object sound direction in the second control group is displayed in a third region of the interactive interface. The control corresponding to the object sound direction includes a plurality of sliding bars, and a quantity of sliding bars is related to a quantity of position dimensions of the sound direction. For example, if the object sound direction is represented in three dimensions by using a Cartesian coordinate system, the control corresponding to the object sound direction may include three sliding bars. The three sliding bars respectively adjust the object sound direction to move leftward and rightward, move forward and backward, or move upward and downward in response to a user operation. For example, a minimum value of the three sliding bars is -10, and a maximum value is 10. Identifiers of a sliding bar for adjusting the object sound direction to move leftward and rightward are respectively Left and Right displayed on left and right sides of the sliding bar. Identifiers of a sliding bar for adjusting the object sound direction to move forward and backward are respectively Back and Front displayed on left and right sides of the sliding bar. Identifiers of a sliding bar for adjusting the object sound direction to move upward and downward are respectively Down and Up displayed on left and right sides of the sliding bar.

In a possible implementation, the decoding device 420 may update, based on a change of metadata of different frames of the audio stream, the control group displayed on the interactive interface.

Optionally, when metadata of a second frame is different from metadata of a first frame of the audio stream, the decoding device 420 updates the control group based on the metadata of the second frame. The second frame is an n^{th} frame following the first frame, and n is a positive integer.

Step 530: The decoding device 420 generates metadata change information in response to an operation on the control group.

In a possible example, the decoding device 420 generates the metadata change information in response to an operation that is performed by the user on the first control group and the second control group. The metadata change information includes the target object parameter with a change of one or more fields.

For example, in response to adjustment of the object sound volume of the object 1 by the user based on the interactive interface, the decoding device 420 increases a value of the object sound volume from 6 to 8. In the metadata change information generated by the decoding device 420, the object sound volume of the changed target object parameter is set to 8, and a value of another field remains unchanged. For another example, the decoding device 420 responds to adjustment performed by the user, based on the interactive interface, on the object sound direction of the object 1, and coordinate values of the object sound direction of the changed target object parameter in the metadata change information generated by the decoding device 420 are updated values. A direction value (for example, a value of leftward and rightward movement, a value of forward and backward movement, or a value of upward and downward movement) in the control corresponding to the object sound direction is mapped to a coordinate system of the object sound direction in the metadata, so that coordinate values of the object sound direction of the changed target object parameter are obtained based on the direction value.

Step 540: When decoding the audio stream, the decoding device 420 changes the metadata based on the metadata change information to obtain a decoding result.

In a possible example, in a process of decoding the audio stream into object information, sound bed information, and metadata information by using the decoder 423, the decoding device 420 replaces the target object parameter in the metadata information with the changed target object parameter, to obtain the decoding result.

The decoding result includes changed metadata information and audio data carried in the audio stream, and the changed metadata information represents the changed metadata.

Optionally, the audio stream further carries the audio data in addition to the foregoing metadata information, and the audio data includes the object information and the sound bed information. The object information, the sound bed information, and the metadata information may be in a pulse code modulation (pulse code modulation, PCM) format, and therefore may alternatively be encoded object information, encoded sound bed information, and encoded metadata information.

In a possible implementation, the decoding device 420 determines the target object parameter in the metadata information based on an index of the target object parameter to change the target object parameter.

Step 550: The decoding device 420 outputs, for the decoding result, audio based on the changed metadata.

In a possible example, the decoding device 420 performs audio mixing of the object information on a corresponding sound bed based on a constraint of the changed metadata, to obtain original multi-channel encoded data, performs sound effect rendering on the original multi-channel encoded data, to obtain rendered multi-channel encoded data, and outputs the audio based on the rendered multi-channel encoded data.

Optionally, the sound effect rendering may be implemented by using an algorithm such as dynamic range compression (dynamic range control, DRC) and audio quality (audio quality, AQ).

In a possible implementation, outputting the rendered multi-channel encoded data by the decoding device 420 may be transmission to an external speaker through a network or the like for playing, or may be playing by using a playing device 421 of the decoding device 420.

In a possible embodiment of this application, for a metadata type supported by the decoding device 420 and an audio output manner, reference may be made to content in an international standard of an audio definition model (audio definition model, ADM). Details are not described herein.

Based on the foregoing steps 510 to 550, the decoding device 420 provides the user with the interactive interface to display the control group, and changes metadata of an object in a decoding process of the audio stream based on an operation that is performed by the user on the control group, so that the user can visually indicate modification of the metadata based on the control group of the interactive interface. In this way, regardless of an online playing scenario or a local playing scenario, the user does not need to re-encode the audio stream to modify the metadata of the object in a bitstream production process, and can adjust an attribute such as a sound channel of any object in the audio stream in real time according to a requirement, to implement audio output that satisfies the user requirement, thereby improving flexibility in the audio output. In addition, the user does not need to re-encode the audio stream, thereby reducing compute resource overheads and operation complexity.

The foregoing describes an overall procedure of the audio processing method with reference to FIG. 5. The audio processing method implements separate adjustment of metadata of an object. However, in scenarios such as a broadcast of a sports event and a live broadcast of a convert, the user often needs to adjust metadata of a plurality of related objects at one time. Therefore, in the audio processing method in this application, the at least one object in the audio stream may be further grouped, and one group includes object parameters of a plurality of related objects, thereby providing the user with a function of adjusting objects in batches through different groups (or referred to as modes).

The following describes in detail an implementation of the group function with reference to FIG. 7.

When metadata change information of an object parameter of a single object is referred to as first metadata change information, the decoding device 420 displays a third control group on the interactive interface based on a group in the metadata; and in response to a third operation on the third control group, determines a target group and generates second metadata change information.

For example, as shown in FIG. 7, a fourth region of the interactive interface displays the third control group, and the decoding device 420 uses group names of a plurality of groups formed by the at least one object as display identifiers, and displays a control corresponding to each group in the third control group in the fourth region, for example, three controls whose object names are a group 1, a group 2, and a group 3.

Next, the control of the group 1 is used as an example. The control of the group 1 includes a selected state and an unselected state. The selected state represents that an object parameter corresponding to the control of the group 1 is in the selected state, and the unselected state represents that the object parameter corresponding to the control of the group 1 is in the unselected state. When the user triggers the control of the group 1 in the unselected state by performing an operation, such as selection by touching a screen or using a remote control, the decoding device 420 switches, in response to the user operation, the object parameter corresponding to the control of the group 1 to the selected state, determines that the target group is an object included in the group 1, and displays, on the interactive interface, the first control group and the second control group corresponding to the object included in the group 1. In FIG. 7, a circular control before a group represents the selected or unselected state of the group. For example, a filled circle represents that the group 1 is in the selected state, and unfilled circles represent that the group 2 and the group 3 are in the unselected state.

In a ball game rebroadcast scenario, the group 1 may be a standard group, the group 2 may be a home-and-away atmosphere group, and the group 3 may be an onsite atmosphere group. For example, when the user selects the home-and-away atmosphere group by performing an operation, such as selection by touching a screen or using a remote control, the decoding device 420 displays, in the first region of the interactive interface, controls corresponding to objects that are included in the home-and-away atmosphere group, for example, a commentary, a game field atmosphere, a game field broadcast, fans of a team A, and fans of a team B.

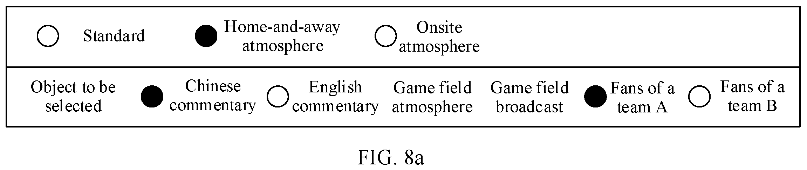

As shown in FIG. 8a, the home-and-away atmosphere group includes objects such as a Chinese commentary, an English commentary, the game field atmosphere, the game field broadcast, the fans of the team A, and the fans of the team B.

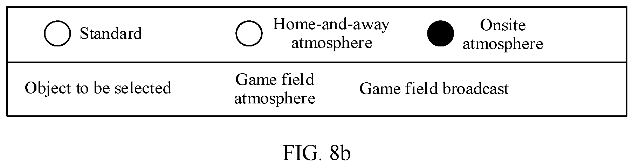

As shown in FIG. 8b, the onsite atmosphere group includes objects such as the game field atmosphere and the game field broadcast.

Considering that different groups usually represent different modes, when selecting a target group to adjust metadata of an object, the user needs to mute an object that is not included in the target group. For ease of user operation, after determining the target group in response to the operation on the third control group, the decoding device 420 generates the second metadata change information. The second metadata change information includes the at least one object parameter that has been changed, and an object sound volume of an object parameter that is in the at least one changed object parameter and does not belong to the target group is a minimum value.

In a possible implementation, when the commentary displayed in the first region of the interactive interface includes the Chinese commentary and the English commentary, considering that sounds of the Chinese commentary and the English commentary are played simultaneously if the user selects the Chinese commentary and the English commentary separately for adjustment, resulting in interference with a sound listening experience of the user, the object parameter in this application may further include a mutually exclusive object field representing a mutually exclusive object of the object parameter. When determining the target object parameter in response to the first operation that is performed by the user on the first control group, the decoding device 420 sets a value of an object sound volume field of an object parameter of the mutually exclusive object of the target object parameter to a minimum value.

Optionally, when displaying a mutually exclusive object of an object, the decoding device 420 displays a group of mutually exclusive objects in a selection box.

For example, a mutually exclusive object of the Chinese commentary includes the English commentary. When determining that the target object parameter is the Chinese commentary in response to the first operation that is performed by the user on the first control group, the decoding device 420 queries the metadata based on an object index of the mutually exclusive object, namely, the English commentary, to find an object parameter of the English commentary, and sets a value of an object sound volume field of the object parameter of the English commentary to the minimum value.

For another example, a mutually exclusive object of the fans of the team A includes the fans of the team B. When determining that the target object parameter is the fans of the team A in response to the first operation that is performed by the user on the first control group, the decoding device 420 queries the metadata based on an object index of the fans of the team B, to find an object parameter of the fans of the team B, and sets a value of an object sound volume field of the object parameter of the fans of the team B to the minimum value.

In a possible implementation, for any object parameter included in the metadata, values of all fields of the object parameter may support a change, or values of some fields of the object parameter may not support a change. In this case, the decoding device 420 sets, on the interactive interface, controls corresponding to some fields that do not support a change to an inoperable state.

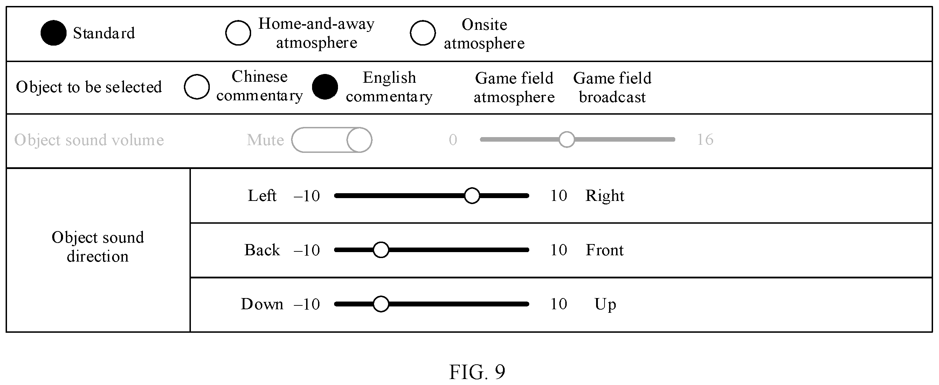

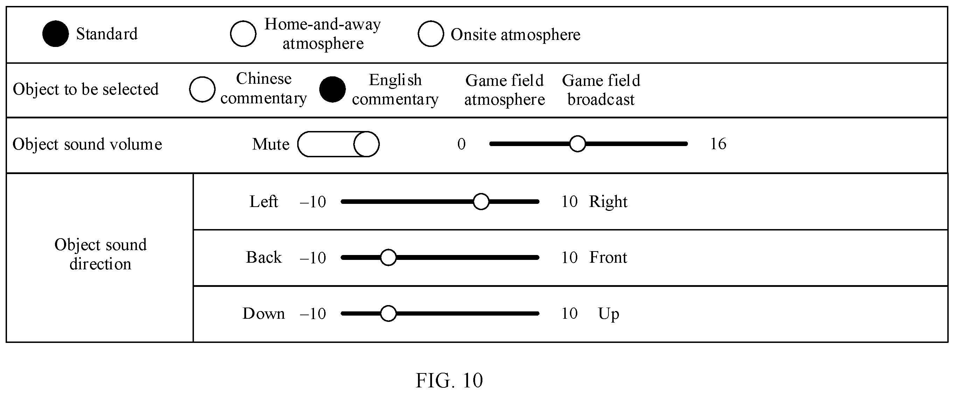

For example, as shown in FIG. 9, the English commentary object does not support adjustment of the object sound volume, and the decoding device 420 sets, on the interactive interface, a control corresponding to the object sound volume to the inoperable state. For another example, as shown in FIG. 10, the English commentary object supports adjustment of the object sound volume, and the decoding device 420 sets, on the interactive interface, a control corresponding to the object sound volume to an operable state.

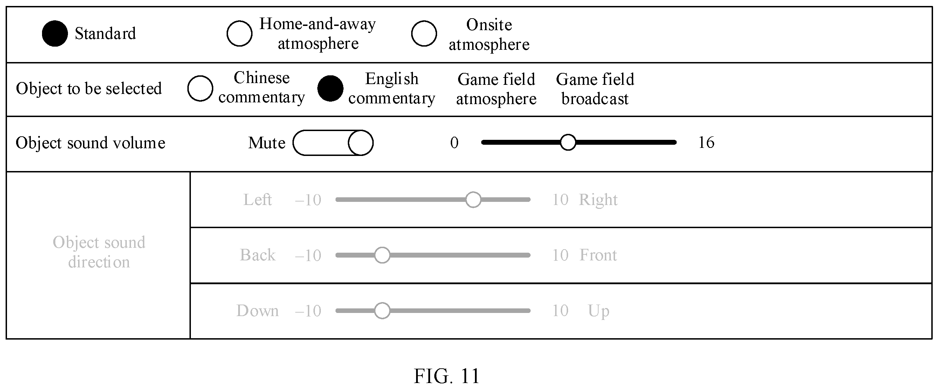

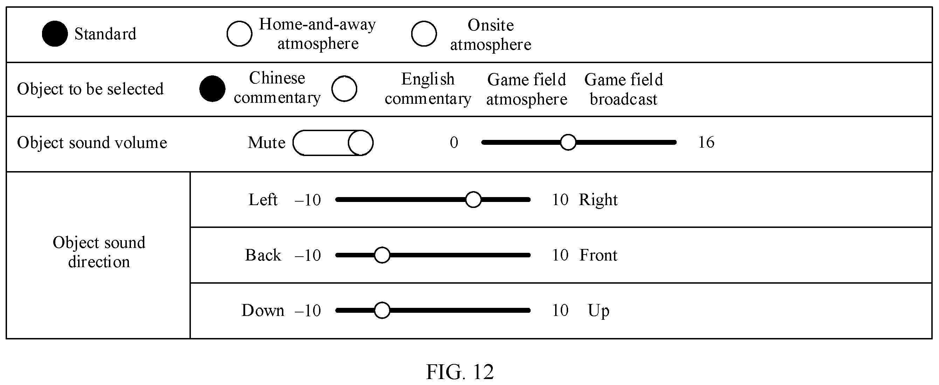

For example, as shown in FIG. 11, the English commentary object does not support adjustment of the object sound direction, and the decoding device 420 sets, on the interactive interface, a control corresponding to the object sound direction to the inoperable state. For example, as shown in FIG. 12, the Chinese commentary object supports adjustment of the object sound direction, and the decoding device 420 sets, on the interactive interface, a control corresponding to the object sound direction to the operable state.

In FIG. 9 to FIG. 12, a low gray scale represents a control in the inoperable state on the interactive interface, and a high gray scale represents a control in the operable state on the interactive interface.

It may be understood that, to implement functions in the foregoing embodiments, the encoding device and the decoding device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

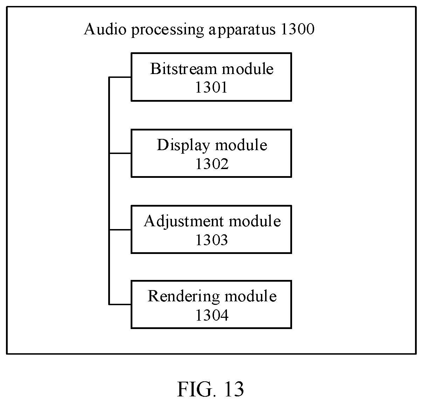

FIG. 13 is a diagram of a structure of an audio processing apparatus according to an embodiment of this application. The audio processing apparatus may be configured to implement functions of the decoding device in the foregoing method embodiment, and therefore can also implement beneficial effects of the foregoing audio processing method embodiment. In this embodiment of this application, the audio processing apparatus may be the decoding device 420 shown in FIG. 4, or may be a module (for example, a chip) used in the decoding device.

As shown in FIG. 13, the audio processing apparatus 1300 includes a bitstream module 1301, a display module 1302, an adjustment module 1303, and a rendering module 1304. The bitstream module 1301 is configured to obtain an audio stream, where the audio stream includes metadata, and the metadata describes object information in the audio stream. The display module 1302 is configured to display a control group on an interactive interface based on the metadata, and generate metadata change information in response to an operation on the control group. The adjustment module 1303 is configured to: when the audio stream is decoded, change the metadata based on the metadata change information to obtain a decoding result, where the decoding result includes changed metadata. The rendering module 1304 is configured to output, based on the changed metadata, audio corresponding to audio data.

In a possible implementation, the audio stream includes at least one object, the metadata includes at least one object parameter, one object parameter describes object information of one object, and the object parameter includes at least one of an object name, an object sound volume, a mute state, and an object sound direction.

The audio processing apparatus 1300 may be configured to implement operation steps corresponding to each method in the foregoing audio processing method embodiment, and therefore can also achieve corresponding beneficial effects. Details are not described herein. For more content about the bitstream module 1301, the display module 1302, the adjustment module 1303, and the rendering module 1304, refer to content in the foregoing audio processing method embodiment. Details are not described herein.

When an encoding apparatus or a decoding apparatus implements, by using software, the method shown in any one of the foregoing accompanying drawings, the encoding apparatus or the decoding apparatus and each unit thereof may also be a software module. A processor invokes the software module to implement the foregoing method. The processor may be a central processing unit (central processing unit, CPU), another application-specific integrated circuit (application specific integrated circuit, ASIC), or a programmable logic device (programmable logic device, PLD). The PLD may be a complex programmable logic device (complex programmable logic device, CPLD), a field programmable gate array (field programmable gate array, FPGA), a generic array logic (generic array logic, GAL), or any combination thereof.

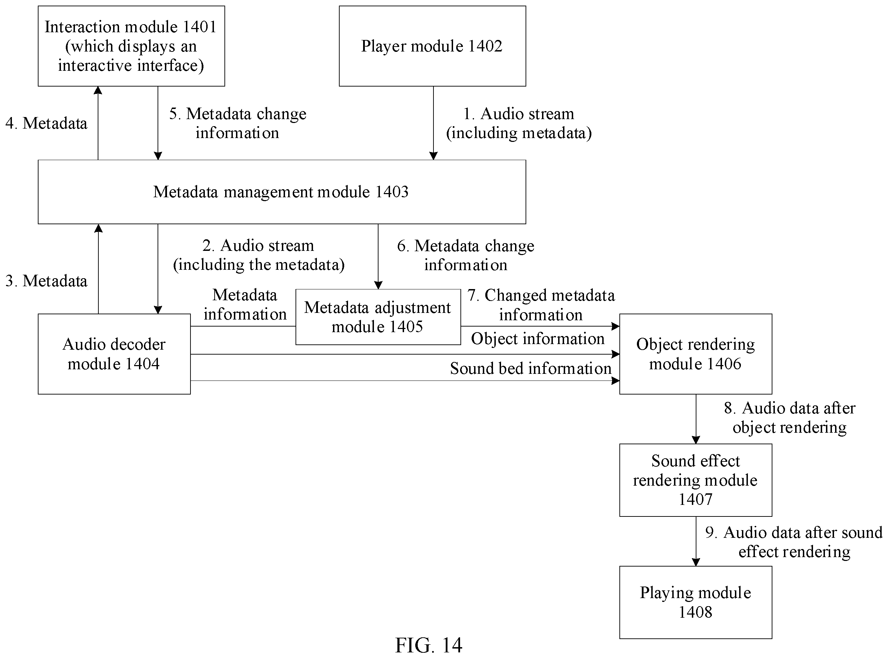

For more detailed descriptions of the encoding apparatus or the decoding apparatus, refer to related descriptions in embodiments shown in the foregoing accompanying drawings. Details are not described herein. It may be understood that the encoding apparatus or the decoding apparatus shown in the foregoing accompanying drawings is merely an example provided in this embodiment. The encoding apparatus or the decoding apparatus may include more or fewer units. This is not limited in this application. For example, as shown in FIG. 14, an audio processing apparatus 1400 includes an interaction module 1401, a player module 1402, a metadata management module 1403, an audio decoder module 1404, a metadata adjustment module 1405, an object rendering module 1406, a sound effect rendering module 1407, and a playing module 1408. The modules are obtained by splitting or combining the modules of the audio processing apparatus 1300. For functions of the modules, refer to descriptions of functional steps 1 to 9 in FIG. 14. Details are not described herein.

When the audio processing apparatus 1300 is implemented by using hardware, the hardware may be implemented by using a processor or a chip. The chip includes an interface circuit and a control circuit. The interface circuit is configured to receive data from a device other than the processor and transmit the data to the control circuit, or send data from the control circuit to a device other than the processor.

The control circuit and the interface circuit are configured to implement, by using a logic circuit or by executing code instructions, the method according to any one of the possible implementations of the foregoing embodiments. For beneficial effect, refer to descriptions of any aspect of the foregoing embodiments. Details are not described herein.

In addition, the audio processing apparatus 1300 may alternatively be implemented by using an electronic device, where the electronic device may mean the decoding device in the foregoing embodiment; or when the electronic device is a chip or chip system used in a server, the audio processing apparatus 1300 may be implemented by using the chip or chip system.

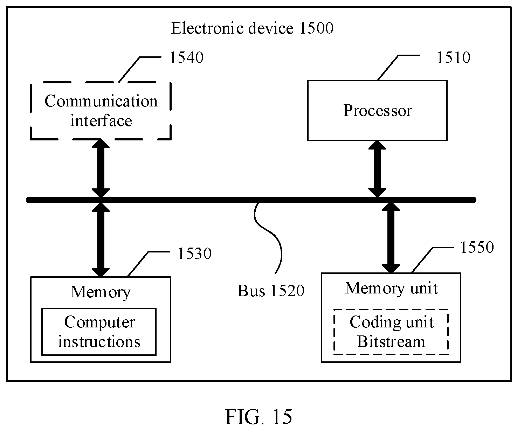

Refer to FIG. 15. FIG. 15 is a diagram of a structure of an electronic device according to an embodiment of this application. The electronic device 1500 includes a processor 1510, a bus 1520, a memory 1530, a memory unit 1550 (which may also be referred to as a main memory (main memory) unit), and a communication interface 1540. The processor 1510, the memory 1530, the memory unit 1550, and the communication interface 1540 are connected through the bus 1520.

It should be understood that, in this embodiment, the processor 1510 may be a CPU, or the processor 1510 may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like.

The communication interface 1540 is configured to implement communication between the electronic device 1500 and an external device or component. In this embodiment, the communication interface 1540 is configured to perform data exchange with another electronic device.

The bus 1520 may include a path, configured to transfer information between the foregoing components (for example, the processor 1510, the memory unit 1550, and the memory 1530). The bus 1520 may further include a power bus, a control bus, a status signal bus, and the like in addition to a data bus. However, for clear description, various buses in the figure are marked as the bus 1520. The bus 1520 may be a Peripheral Component Interconnect Express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like.

In an example, the electronic device 1500 may include a plurality of processors. The processor may be a multi-core (multi-CPU) processor. The processor herein may be one or more devices, circuits, and/or compute units configured to process data (for example, computer program instructions). The processor 1510 may invoke computer program instructions stored in the memory 1530, to perform steps 510 to 550 shown in FIG. 5.

It is worth noting that, FIG. 15 shows only an example in which the electronic device 1500 includes one processor 1510 and one memory 1530. Herein, the processor 1510 and the memory 1530 separately indicate a type of component or device. In a specific embodiment, a quantity of each type of components or devices may be determined according to a service requirement.

The memory unit 1550 may correspond to a storage medium configured to store information such as pre-upgrade data in the foregoing method embodiment. The memory unit 1550 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct Rambus random access memory (direct Rambus RAM, DR RAM).

The memory 1530 is configured to store a bitstream, a to-be-encoded coding unit, or the like, and may be a solid-state drive or a mechanical hard disk.

It should be understood that the electronic device 1500 may be a DPU. The electronic device 1500 according to this embodiment may correspond to an encoding apparatus or a decoding apparatus in embodiments, and may correspond to a corresponding executive body in FIG. 5. In addition, the foregoing and other operations and/or functions of each module in the encoding apparatus or the decoding apparatus are respectively used to implement corresponding procedures in the foregoing method embodiment. For brevity, details are not described herein.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist as discrete components in a network device or a terminal device.

This application further provides a chip system. The chip system includes a processor, configured to implement functions of the encoding device or the decoding device in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used for implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An audio processing method, comprising:
obtaining an audio stream, wherein the audio stream comprises metadata, and the metadata describes object information in the audio stream;
displaying a control group on an interactive interface based on the metadata;
generating metadata change information in response to an operation on the control group;
when decoding the audio stream, changing the metadata based on the metadata change information to obtain a decoding result, wherein the decoding result comprises changed metadata and audio data carried in the audio stream; and
outputting, based on the changed metadata in the decoding result, audio corresponding to the audio data.

2. The method according to claim 1, wherein the audio stream comprises at least one object, the metadata comprises at least one object parameter, one object parameter describes object information of one object, the object parameter comprises at least one of an object name, an object sound volume, a mute state, and an object sound direction, the control group comprises a first control group and a second control group, and displaying the control group on the interactive interface based on the metadata comprises:
displaying the first control group based on a name of the at least one object parameter;
determining a target object parameter in response to a first operation on the first control group; and
displaying the second control group based on the target object parameter, wherein a control in the second control group is used to: in response to a second operation, adjust the object sound volume, the mute state, or the object sound direction and generate the metadata change information.

3. The method according to claim 2, wherein the metadata change information comprises first metadata change information, the first metadata change information comprises a changed target object parameter, and changing the metadata based on the metadata change information to obtain the decoding result comprises:
parsing the audio stream into object information, sound bed information, and metadata information;
replacing the target object parameter in the metadata information with the changed target object parameter to obtain changed metadata information, wherein the changed metadata information represents the changed metadata; and
outputting the decoding result, wherein the decoding result comprises the object information, the sound bed information, and the changed metadata information.

4. The method according to claim 3, wherein the first metadata change information further comprises an index of the target object parameter, and the method further comprises:
determining the target object parameter in the metadata information based on the index of the target object parameter.

5. The method according to any one of claims 2 to 4, wherein the object parameter further comprises a group to which an object belongs and a group member, and the method further comprises:
displaying a third control group on the interactive interface based on the metadata; and
in response to a third operation on the third control group, determining a target group and generating second metadata change information, wherein the second metadata change information comprises the at least one object parameter that has been changed, and an object sound volume of an object parameter that is in the at least one changed object parameter and does not belong to the target group is a minimum value.

6. The method according to any one of claims 2 to 5, wherein the object parameter further comprises a mutually exclusive object, and after determining the target object parameter in response to the first operation on the first control group, the method further comprises:
setting an object sound volume of an object parameter of the mutually exclusive object of the target object parameter to a minimum value.

7. The method according to any one of claims 1 to 6, wherein the method further comprises:
when metadata of a second frame is different from metadata of a first frame of the audio stream, updating the control group based on the metadata of the second frame, wherein the second frame is an n^{th} frame following the first frame, and n is a positive integer.

8. The method according to claim 3, wherein outputting, based on the changed metadata in the decoding result, the audio corresponding to the audio information comprises:
performing audio mixing of the object information on a corresponding sound bed based on a constraint of the changed metadata, to obtain original multi-channel encoded data;
performing sound effect rendering on the original multi-channel encoded data to obtain rendered multi-channel encoded data; and
outputting the audio based on the rendered multi-channel encoded data.

9. The method according to any one of claims 2 to 8, wherein the object sound direction is represented by three-dimensional coordinates.

10. An audio processing apparatus, wherein the apparatus comprises a module for performing operation steps of the method according to any one of claims 1 to 9.

11. An electronic device, wherein the electronic device comprises a memory and a processor, the memory is configured to store a group of computer instructions, and when the processor executes the group of computer instructions, operation steps of the method according to any one of claims 1 to 9 are performed.

12. An encoding and decoding system, comprising an encoding device and a decoding device, wherein the encoding device is communicatively connected to the decoding device, the encoding device is configured to generate an audio stream, the audio stream comprises metadata, the metadata describes object information in the audio stream, and the decoding device is configured to implement the method according to any one of claims 1 to 9.

13. A readable storage medium, wherein the readable storage medium comprises a computer program or instructions, and when the computer program or the instructions are run on a computer, the computer is caused to perform operation steps of the method according to any one of claims 1 to 9.
